# EUROPEAN PATENT APPLICATION

(11) **EP 3 239 107 A1**
(43) Date of publication of application: **01.11.2017**
(21) Application number: 15873720.5
(22) Date of filing: 14.07.2015
(51) Int. Cl.: C02F 9/08, C02F 1/72, B01D 36/00

(54) **MOBILE WATER PURIFICATION STATION**

(30) Priority: 26.12.2014 RU 2014153400
(71) Applicant: Petrov, Sergey Vasil'evich, Kirishi 187110 (RU)
(72) Inventor: SAMSONOV, Oleg Evgen'evich, St.Petersburg 193168 (RU); PETROV, Denis Sergeevich, Kirishi 187110 (RU); VOLKOV, Mi hail Vital'evich, Len. obl. Kirishi 187110 (RU); DUBOV, Oleg Vladimirovich, St.Petersburg 192177 (RU)
(74) Representative: Jeck, Anton
(86) International application number: PCT/RU2015/000443
(87) International publication number: WO 2016/105239

(57) **Abstract**

The mobile water treatment plant is designed for the production of potable water from natural water for the needs of consumers having no access to centralized water supply systems, for example in rotational camps, cottages, etc.

The mobile water treatment plant suggested herein consists of a screen, an oxidation unit, a product water storage tank, a disinfection unit, a storage tank, pipelines and auxiliary equipment;the plant is equipped with a fibre filter installed between the screen and the oxidation unit, the oxidation unit includes a plasma oxidation plant, and a carbon filter and a conservation unit are installed between the oxidation unit and the storage tank.

If necessary, a coagulation unit and an ejection unit for ozone-containing gas can be additionally fitted between the screen and the fibre filter.

The proposed plant is more effective compared to similar devices thanks to the fibre filter and the plasma oxidation plant; its modular design makes it more compact, flexible and easily adjustable to the quality of water to be treated and to the consumer requirements.

## Description

A mobile water treatment plant is designed for the production of potable water from natural water for the needs of consumers having no access to centralized water supply systems, for example in rotational camps, cottages, etc.

Currently, numerous devices are available to remove contaminants from water (RU2366612, 2009; RU2183980, 2002; RU143767, 2013; RU 2228916, 2003, etc.), which differ from each other both by components and treatment technologies. Generally, well-known plants are either fixed ones capable to treat considerable volumes of water or are designed to produce relatively small amounts of pure water for the household use.

However, there is a need for mobile water treatment plants which can be installed in a container and transported to a required place without disassembling basic elements.

Specifically, a small mobile water treatment plant (RU 111127, 2009) is available, which consists of a screen, an oxidation chamber with a cavitator inside, an ejector and a pump creating a recirculation loop with the oxidation chamber, an automatic control system, a pressure filter, pumps, a coagulation unit, necessary pipelines and a storage tank for product water. The plant is fastened in a containerized module which makes it mobile.

A disadvantage of this plant is that it is difficult to prevent possible microbial contamination of the treated water in case of its slow distribution.

A small mobile water treatment plant (RU 122086) installed in a containerized module made of sheet steel is available. It includes an inlet screen, an oxidation chamber with an ozonator, a cavitator, an ejector and a pump creating a recirculation circuit with the cavitator, a pressure filter, and two interconnected coagulation chambers - one connected to the oxidation chamber and another to the pressure filter through the second pump and a check valve, as well as a storage tank for product water. A unit for residual ozone decomposition is connected to the product water storage tank.

However, this plant is not very suitable for the treatment of low-mineralized waters with high content of organic matter, which are typical for the North part of the Asiatic Russia, where this water is a sole source of drinking and household water in rotational camps. The colour of such waters could be up to 100-120degrees of the colour scale, with the odour of 3-5 points. Furthermore, the content of silicon, iron, and manganese in the form of complex and colloidal compounds in such waters is high (relative to MPC, maximum permissible concentrations), therefore additional treatment methods are required to remove contaminants.

The most similar to the claimed solution is the technology of a small mobile water treatment plant (RU142624, 2014) which is a water treatment plant installed in a containerized module. The plant consists of the following components connected in series by pipelines: a pre-treatment unit including an inlet screen with a valve and an electrochemical coagulator; an oxidation chamber; and a final treatment unit including two coagulation chambers, a pressure filter and a storage tank for product water. To protect the water in the storage tank from bacterial contamination, the plant includes an additional ozonator connected to a power supply unit and an air filter, a cavitator inside the storage tank creating a recirculation circuit with an ejector and a pump, as well as a residual ozone decomposition unit.

First, the feed water comes through the screen into the electrochemical coagulator, where organic contaminants break down. Then the water flows to the oxidation chamber and is pumped to the ejector and back to the oxidation chamber where it is saturated with oxygen from air and where other gases are released. The process of oxidation, breaking down, and crystallization of contaminants is completed in the coagulation chambers. From the coagulation chamber, the water is pumped to the pressure filter and further to the storage tank for product water.

A disadvantage of thisplant is its complex treatment technology and insufficient efficiency in the removal of organic substances.

The engineering challenge the authors faced was to create a simpler and more reliable water treatment plant producing high quality potable water.

The technical result is achieved by using a plant consisting of a screen, an oxidation and disinfection unit, a storage tank, pipelines and auxiliary equipment, with a fibre filter downstream of the screen, a plasma oxidation unit used as an oxidation and disinfection chamber, and a carbon filter and a conservation unit installed between the oxidation/disinfection chamber and the storage tank.

The conservation unit includes a dosing device for sodium hypochlorite or, preferably, an electrochemical chlorination plant, to prevent contamination of the product water in the storage tank and pipelines before it is distributed to consumers.

Depending on the quality of the water to be treated, a coagulation unit, e.g. an electrocoagulation unit and/or a unit for the ejection of ozone-containing gas, can be installed between the screen and the fibre filter.

The auxiliary equipment of the plant includes a container, pumps, accumulators, pressure gauges, valves, and other instruments.

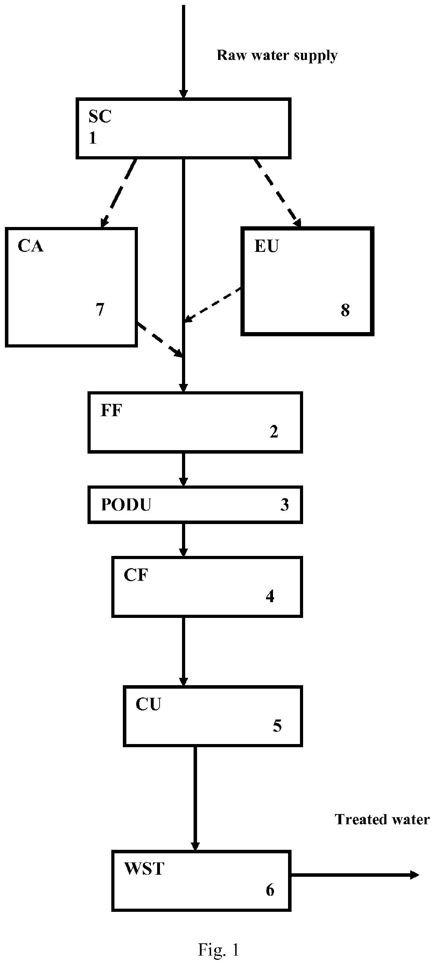

A general configuration of the plant is shown in Fig. 1, where:
1. screen, SC;
2. fibre filter, FF;
3. plasma oxidation and disinfection unit, PODU
4. carbon filter, CF;
5. conservation unit, CU;
6. product water storage tank WST;
7. coagulation unit, CA;
8. ejection unit for ozone-containing gas, EU

The plant is installed in a containerized module made of sheet steel which is connected after the installation to a water tap with a pipeline to the product water storage tank WST.

The casing of the containerized module is usually made of 2 mm sheet steel with drainage holes in the floor to drain the tanks prior to transportation, to discharge dirty wash water, in case of emergencies to avoid water freezing. In order to ensure comfortable handling, the containerized module is usually equipped with four hangers (lifting lugs) which ensure fast and secure lifting and transportation. The plant can be easily relocated to remote areas (for example to rotational camps or to emergency areas) by helicopter, as well as by motor vehicles, by water, or by railway transport.

For regions with harsh climates, it is practical to insulate the floor and walls of a containerized module against cold, for example with mineral wool plates coated by galvanized metal sheets.

For the convenience of maintenance, a containerized module can be equipped with double-leaf doors; and to handle a module in case of transportation, the roof can be equipped with lifting lugs.

Moreover, the plant can be additionally equipped with a microcontroller to automatically control the water treatment plant.

The plant includes a pre-treatment unit PTU, an oxidation unit OU, and a final treatment unit FTU.

The PTU is designed to remove coarse and colloidal contaminants, sand, silt, etc. Generally it includes a screen 1 (coarse filter) and a fibre filter 2 (fine filter).

The screen 1 is a standard mesh filter with manual or automatic washing of the mesh. The fibre filter 2 is a pipe with a bundle of fibres inside, with the diameter of the bundle similar to the inner diameter of the pipe. The lower end of the bundle is fastened while its upper end is attached to a piston which can move inside the pipe but is not sealed in it. In the filtration mode, water flows down the pipe and around the piston. Under the pressure of the water stream, the piston moves down compressing the bundle of fibres. As a result, a fibrous filtering layer is created where suspended solidsget entrapped. During backwashing of the filter, water, together with compressed air, is fed from the bottom upwards. The pressure of the water and air makes the piston move up stretching the bundle of fibres, with the bundle of fibres vigorously rinsed by the water-and-air mixture.

PTU can additionally include coagulation unit CU7 installed between SC1 and FF2. It consists either of a metering device for coagulant solution dosing (sulphate or aluminium chloride) and, possibly, a flocculant; or an electrocoagulation unit with soluble aluminium or iron anodes, which is a preferred option in case of heavy duty operation.

PTU can also include an ejection unit EU 8, through which an ozone-containing mixture of gases from the plasma oxidation unit is supplied. The EU 8 is installed between the screen and the fibre filter, or upstream of CU 7 if applicable.

The oxidation unit (OU) is designed for the disinfection of water after PTU, as well as to reduce its colour, to remove odours and decrease permanganate value. PTU includes a plasma oxidation unit, where organic contaminants in water are oxidized by excited atomic oxygen generated in the discharge, and a carbon ozone absorber.

The plant is designed to break up organic molecules and cells by both free radicals and ozone, and hard UV radiation of the discharge with the generation of intermediate products (carboxylic acids, ketones) which are mineralized provided there is sufficient oxidation time and turn into carbon dioxide and water.

Air or oxygen generated by the membrane separation of air can be a source of oxygen for the oxidation. As purging produces gas containing ozone, this gas comes to the carbon ozone absorber and after that is released to the atmosphere. Part of the ozone-containing gas can be pumped out with the use of an ejector pump installed downstream of a screen. In this case, a bigger portion of ozone will be consumed for the oxidation of contaminants in the feed water, and the remaining ozone will be returned to the plasma oxidation plant, which not only improves the effectiveness of oxidation and removal of iron, but also reduces load on carbon ozone destructor.

After the pre-treatment with coagulation and the plasma treatment, surface water (for example, river water) in general becomes suitable for drinking.

Nevertheless, in case of small amounts of coagulant and a short plasma oxidation process, the quality of the water may not meet the standards for colour and odour. Moreover, to maintain sterility of the product water during its storage and distribution, it should contain small amounts of active chlorine.

A final treatment stage (FTU) is used to address these issues; it consists of a cartridge carbon filter CF 4 (of carbon unit type) and water chlorination using a sodium hypochlorite metering device or electrochemical chlorination unit ECU 5. The treated water comes to product water storage tank WST.

The working principle of the plant is as follows. Water to be treated comes to SC 1, where coarse impurities, sand, sludge, etc. are removed. After that, if required, it is treated by ozone in the EU 7, where part of organic contaminants is broken down, and iron salts are oxidized to the trivalent state. Then, the water comes to CU7, where a coagulant or a mixture of a coagulant and a flocculant is applied to promote the formation of flocs which will be removed in FF 2. FF 2 is the final treatment stage removing suspensions from the water, after which the water comes to the plasma oxidation plant, where organic contaminants in water are oxidized by excited atomic oxygen generated in the discharge. The generated ozone-containing gas comes to EU and partly to the carbon ozone absorber and then released to the atmosphere. In case of small amounts of coagulant and short plasma oxidation the quality of the water may not meet the standards for colour and odour; therefore it is additionally treated in CF 4. To maintain sterility of the product water during its storage and distribution, it should contain small amounts of active chlorine, which is achieved by dosing sodium hypochlorite or by electrochemical chlorination in ECU 5. The treated water comes to product water storage tank WST and then is distributed to consumers.

The proposed plant is more effective compared to similar devices thanks to the fibre filter and the plasma oxidation plant; its modular design makes it more compact, flexible and easily adjustable to the quality of water to be treated and to the consumer requirements.

## Claims

1. A mobile water treatment plant consisting of a screen, an oxidation unit, a product water storage tank, pipelines, and auxiliary equipment, different from other solutions in that a fibre filter is installed between the screen and the oxidation unit, and the oxidation unit includes a plasma oxidation plant.

2. A mobile plant as in No. 1, but with a coagulation unit installed between the screen and the fibre filter.

3. A mobile plant as in No. 1, but with an ejection unit for ozone-containing gas installed between the screen and the fibre filter.

4. A mobile plant as in No.1, with the difference in that between the oxidation unit and a storage tank a carbon filter is installed.

5. A mobile plant as in p.1, with the difference in that between the oxidation unit and a storage tank a conservation unit is installed.

6. A mobile plant as in p.5, with the difference in that the conservation unit contains an electrochemical chlorination unit.
